# EUROPÄISCHE PATENTSCHRIFT

(11) **EP 1 181 474 B1**
(45) Veröffentlichungstag und Bekanntmachung des Hinweises auf die Patenterteilung: **17.12.2003**
(21) Anmeldenummer: 00949061.6
(22) Anmeldetag: 26.05.2000
(51) Int. Cl.: F16K 37/00

(54) **DIAGNOSESYSTEM FÜR EIN VON EINEM STELLUNGSREGLER ÜBER EINEN ANTRIEB BETÄTIGBARES VENTIL**
DIAGNOSTIC SYSTEM FOR A VALVE THAT CAN BE ACTUATED BY A POSITION CONTROLLER VIA A DRIVE
SYSTEME DIAGNOSTIQUE POUR CLAPET ACTIONNABLE PAR UN REGULATEUR DE POSITION PAR L'INTERMEDIAIRE D'UN MECANISME D'ENTRAINEMENT

(30) Priorität: 27.05.1999 DE 19924377
(43) Veröffentlichungstag der Anmeldung: 27.02.2002
(73) Patentinhaber: SIEMENS AKTIENGESELLSCHAFT, 80333 München (DE)
(72) Erfinder: KUMPFMÜLLER, Hans-Georg, D-76889 Gleiszellen-Gleishorbach (DE)
(86) Internationale Anmeldenummer: DE0001711
(87) Internationale Veröffentlichungsnummer: WO00073688

(56) Entgegenhaltungen:
- EP-A- 0 637 713
- DD-A- 232 965
- US-A- 5 616 829
- PATENT ABSTRACTS OF JAPAN vol. 013, no. 524 (P-964), 22. November 1989 (1989-11-22) & JP 01 213539 A (BABCOCK HITACHI KK), 28. August 1989 (1989-08-28)
- PATENT ABSTRACTS OF JAPAN vol. 005, no. 061 (M-065), 24. April 1981 (1981-04-24) & JP 56 014672 A (BABCOCK HITACHI KK), 12. Februar 1981 (1981-02-12)

## Beschreibung

Die Erfindung betrifft ein Diagnosesystem für ein von einem Stellungsregler über einen Antrieb betätigbares Ventil mit einer Einrichtung zur Erfassung, Speicherung und Auswertung von Körperschallspektren an dem Ventil.

Bei einem derartigen, aus der EP 0 637 713 A1 bekannten Diagnosesystem ist an dem Gehäuse des Ventils ein Körperschallsensor angebracht, dessen Signal einer Einrichtung zur Erfassung und Speicherung von Körperschallspektren zugeführt wird. Bei intaktem Ventil und bei defektem Ventil ergeben sich unterschiedliche Verläufe des Schwingungspegels über der Frequenz. Durch Bildung des Flächenintegrals und Vorgabe einer tolerierbaren Abweichung kann ein schadhaftes Ventil erkannt werden, wobei sich insbesondere Verschleiß, bedingt durch Korrosion, Kavitation oder Erosion, feststellen läßt.

Der Erfindung liegt die Aufgabe zugrunde, eine besonders zuverlässige Diagnose an Ventilen zu ermöglichen.

Gemäß der Erfindung wird die Aufgabe dadurch gelöst, daß das Diagnosesystem der eingangs angegebenen Art derweise ausgebildet ist, daß in der Einrichtung zur Erfassung, Speicherung und Auswertung der Körperschallspektren ein bei geringfügig geöffnetem intakten Ventil erfaßtes Körperschallspektrum abspeicherbar ist, daß das Ventil zu Diagnosezwecken schließbar ist und daß die Ähnlichkeit des dabei erfaßten Körperschallspektrums mit dem abgespeicherten Körperschallspektrum als ein Kriterium für eine Undichtigkeit des Ventils herangezogen wird. Das Körperschallspektrum von defekten Ventilen hängt nicht nur von dem Ventil selbst, sondern auch von dem durchströmenden Medium, dessen Druck und den Nebengeräuschen beim bestimmungsgemäßen Betrieb, z. B. den Geräuschen benachbarter Pumpen, ab, so daß die Körperschallspektren eines intakten und eines defekten Ventils nicht exakt vorherbestimmbar sind. Jedoch erzeugt ein Ventil in fast geschlossener Stellung ein Körperschallspektrum, das dem eines geschlossenen Ventils mit defektem Ventilsitz sehr ähnlich ist. Bei dem erfindungsgemäßen Diagnosesystem wird daher das bei fast geschlossenem bzw. geringfügig geöffnetem Ventil erfaßte und abgespeicherte Körperschallspektrum als Referenz zur Identifizierung des Körperschallspektrums eines geschlossenen Ventils mit defektem Ventilsitz herangezogen.

Um umgekehrt das Körperschallspektrum eines geschlossenen Ventils mit intaktem Ventilsitz identifizieren zu können, ist vorzugsweise in der Einrichtung zur Erfassung, Speicherung und Auswertung von Körperschallspektren ein bei geschlossenem intakten Ventil erfaßtes weiteres Körperschallspektrum abspeicherbar, wobei die Ähnlichkeit des bei zu Diagnosezwecken geschlossenem Ventil erfaßten Körperschallspektrums mit dem abgespeicherten weiteren Körperschallspektrum als ein Kriterium für die Intaktheit des Ventils herangezogen wird.

Die unterschiedlichen Kriterien für die Undichtigkeit des Ventils und für die Dichtigkeit des Ventils können, vorzugsweise durch eine Fuzzy-Verknüpfung, zu einem Ventilzustandssignal verknüpft werden.

Da die in die Körperschallspektren eingehenden betriebsbedingten Nebengeräusche, z. B. Pumpengeräusche, je nach dem Zeitpunkt der Erfassung der Körperschallspektren unterschiedlich sein können, ist vorgesehen, daß bei der Erfassung des Körperschallspektrums für eine bestimmte Ventilstellung jeweils ein zusätzliches Körperschallspektrum bei einer anderen Ventilstellung erfaßt wird und daß das Körperschallspektrum bei der bestimmten Ventilstellung vor seiner Abspeicherung und/oder Auswertung von übereinstimmenden Spektralanteilen des zusätzlich erfaßten Körperschallspektrums befreit wird. Die abgespeicherten bzw. zur Auswertung gelangenden Körperschallspektren sind dann im wesentlichen von den zufälligen momentanen Nebengeräuschen unabhängig.

Die Einrichtung zur Erfassung, Speicherung und Auswertung von Körperschallspektren ist vorzugsweise integraler Bestandteil des Stellungsreglers, so daß die Diagnose des Ventils über die Datenschnittstelle des Stellungsreglers veranlaßt und das Ergebnis der Auswertung der Körperschallspektren über diese Datenschnittstelle abgefragt werden kann.

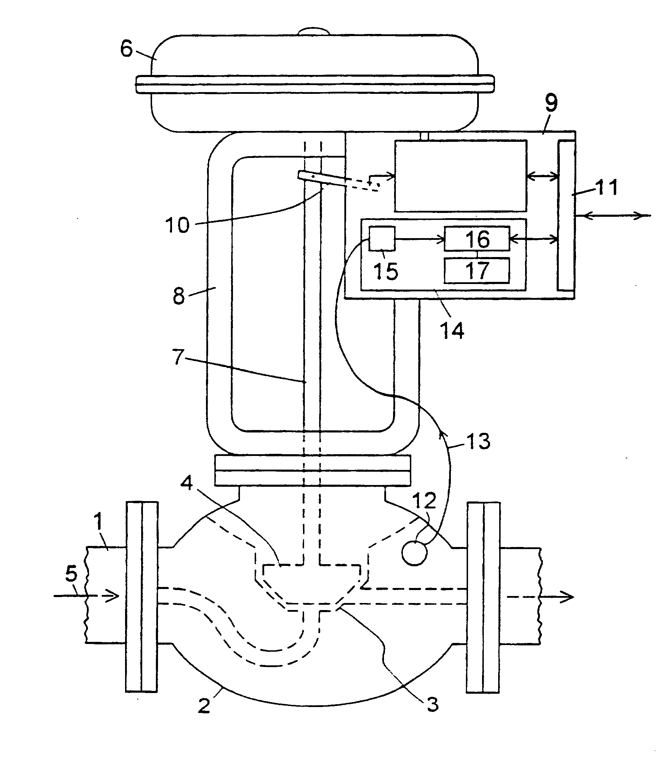

Im weiteren wird ein Ausführungsbeispiel der Erfindung anhand der Zeichnung erläutert.

In einer Rohrleitung 1 einer nicht weiter gezeigten Anlage ist ein Ventil 2 eingebaut, das durch einen entsprechenden Hub eines mit einem Ventilsitz 3 zusammenwirkenden Schließkörpers 4 den Durchtritt eines Mediums 5 steuert. Der Hub wird durch einen pneumatischen Antrieb 6 erzeugt und mittels einer Ventilstange 7 auf den Schließkörper 4 übertragen. Der Antrieb 6 ist über ein Joch 8 mit dem Gehäuse des Ventils 2 verbunden. An dem Joch 8 ist ein Stellungsregler 9 angebracht, der eingangsseitig über ein an der Ventilstange 7 angreifendes Verbindungsstück 10 den Hub erfaßt, diesen mit einem über eine Datenschnittstelle 11 zugeführten Sollwert vergleicht und ausgangsseitig den pneumatischen Antrieb 6 im Sinne einer Ausregelung der Regeldifferenz steuert.

An dem Gehäuse des Ventils 2 oder mit diesen unmittelbar verbundenen Teilen ist ein Körperschallsensor 12 angebracht, dessen Signal 13 einer Einrichtung 14 zur Erfassung, Speicherung und Auswertung von Körperschallspektren zugeführt wird. Diese Einrichtung 14 ist bei dem gezeigten Ausführungsbeispiel Bestandteil des Stellungsreglers 9, kann aber auch von diesem getrennt ausgebildet sein.

Die Einrichtung 14 enthält eine Signalaufbereitungsschaltung 15, in der das Signal 13 des Körperschallsensors 12 verstärkt, vorgefiltert und digitalisiert wird. In einer nachgeordneten Recheneinheit 16 wird aus dem aufbereiteten Signal 13 beispielsweise durch Fast-Fourier-Transformation das Körperschallspektrum ermittelt. Dieses kann je nach Anforderung in einem Speicher 17 abgespeichert oder weiter ausgewertet werden, um eine Information über den Zustand des Ventils 2 zu erhalten. Die Erfassung, Speicherung und Auswertung der Körperschallspektren wird über die Datenschnittstelle 11 veranlaßt, über die auch das Ergebnis der Auswertung der Körperschallspektren abfragbar ist.

Wenn von einem intakten Zustand des Ventils 2 ausgegangen werden kann, also z. B. bei der Inbetriebnahme oder nach Austausch des Ventils 2, wird das Ventil 2 in eine fast geschlossene Stellung gesteuert und anschließend das zugehörige Körperschallspektrum erfaßt und abgespeichert. Dieses abgespeicherte Körperschallspektrum ist dem eines geschlossenen aber undichten Ventils sehr ähnlich und dient dazu, bei einer späteren Diagnose des Ventils 2 einen solchen Verschleißzustand des Ventils 2 zu identifizieren. Dazu wird das Ventil 2 in Schließstellung gesteuert und das zugehörige Körperschallspektrum erfaßt. In der Recheneinheit 16 wird das bei Schließstellung des Ventils 2 erfaßte Körperschallspektrum mit dem abgespeicherten Körperschallspektrum verglichen, wobei die Ähnlichkeit beider Körperschallspektren ein Kriterium für die Undichtigkeit des Ventils 2 ist.

Die Ähnlichkeit der miteinander verglichenen Körperschallspektren kann durch unterschiedliche Nebengeräusche beeinflußt sein, die durch unterschiedliche Betriebszustände der Anlage, in der das Ventil 2 eingebaut ist, bedingt sind und mit dem Zustand des Ventils 2 nichts zu tun haben. Um den Einfluß solcher Nebengeräusche auf die Auswertung der Körperschallspektren zu reduzieren, wird bei jeder Erfassung eines Körperschallspektrums für eine bestimmte Ventilstellung ein zusätzliches Körperschallspektrum bei einer anderen Ventilstellung erfaßt; von dem bei der bestimmten Ventilstellung erfaßten Körperschallspektrum wird anschließend das weitere Körperschallspektrum subtrahiert, so daß für die weitere Auswertung bzw. Speicherung nur noch solche Spektralanteile verbleiben, die im wesentlichen nur von der Ventilstellung abhängig sind.

Um neben dem obengenannten Kriterium für eine mögliche Undichtigkeit des Ventils 2 auch ein Kriterium für den intakten Zustand des Ventils 2 zu erhalten, wird bei der Inbetriebnahme das Ventil 2 in einen geschlossenen Zustand gesteuert und ein weiteres Körperschallspektrum erfaßt und abgespeichert; wenn das Ventil 2 später zu Diagnosezwecken in den geschlossenen Zustand gesteuert wird, wird das dabei erfaßte Körperschallspektrum auch mit dem abgespeicherten weiteren Körperschallspektrum verglichen, wobei die Ähnlichkeit zwischen beiden Körperschallspektren als ein Kriterium für die Intaktheit des Ventils 2 herangezogen wird.

## Patentansprüche

1. Diagnosesystem für ein von einem Stellungsregler (9) über einen Antrieb (6) betätigbares Ventil (2) mit einer Einrichtung (14) zur Erfassung, Speicherung und Auswertung von Körperschallspektren an dem Ventil, **dadurch gekennzeichnet**, das Diagnosesystem derweise ausgebildet ist, daß in der Einrichtung (14) ein bei geringfügig geöffnetem intakten Ventil (2) erfaßtes Körperschallspektrum abgespeichert wird, daß das Ventil (2) zu Diagnosezwecken geschlossen wird und daß die Ähnlichkeit des dabei erfaßten Körperschallspektrums mit dem abgespeicherten Körperschallspektrum als ein Kriterium für eine Undichtigkeit des Ventils (2) herangezogen wird.

2. Diagnosesystem nach Anspruch 1, **dadurch gekennzeichnet, daß** in der Einrichtung (14) ein bei geschlossenem intakten Ventil (2) erfaßtes weiteres Körperschallspektrum abspeicherbar ist und daß die Ähnlichkeit des bei zu Diagnosezwecken geschlossenem Ventil (2) erfaßten Körperschallspektrums mit dem abgespeicherten weiteren Körperschallspektrum als ein Kriterium für die Intaktheit des Ventils (2) herangezogen wird.

3. Diagnosesystem nach Anspruch 1 oder 2, **dadurch gekennzeichnet, daß** die Kriterien, vorzugsweise durch Fuzzy-Verknüpfung, zu einem Ventilzustandssignal verknüpft werden.

4. Diagnosesystem nach einem der vorangehenden Ansprüche, **dadurch gekennzeichnet, daß** bei der Erfassung des Körperschallspektrums für eine bestimmte Ventilstellung jeweils ein zusätzliches Körperschallspektrum bei einer anderen Ventilstellung erfaßt wird und daß das Körperschallspektrum bei der bestimmten Ventilstellung vor seiner Abspeicherung und/oder Auswertung von übereinstimmenden Spektralanteilen des zusätzlich erfaßten Körperschallspektrums befreit wird.

5. Diagnosesystem nach einem der vorangehenden Ansprüche, **dadurch gekennzeichnet, daß** die Einrichtung (14) zur Erfassung, Speicherung und Auswertung von Körperschallspektren Bestandteil des Stellungsreglers (9) ist.

## Claims

1. Diagnostic system for a valve (2) which can be actuated by a position controller (9) via a drive (6) with a device (14) for recording, storing and evaluating structure-borne noise spectra on the valve, **characterised in that** the diagnostic system is constructed in such a way that in the device (14) a structure-borne noise spectrum recorded with a slightly open intact valve (2) is stored, the valve (2) is closed for diagnostic purposes and the similarity of the therein recorded structure-borne noise spectrum to the stored structure-borne noise spectrum is enlisted as a criterion for leakage of the valve (2).

2. Diagnostic system according to claim 1, **characterised in that** in the device (14) a further structure-borne noise spectrum recorded with closed intact valve (2) can be stored and the similarity of the structure-borne noise spectrum recorded with the valve (2) closed for diagnostic purposes to the stored further structure-borne noise spectrum is enlisted as a criterion for the intactness of the valve (2).

3. Diagnostic system according to claim 1 or 2, **characterised in that** the criteria are linked, preferably by fuzzy linking, to form a valve state signal.

4. Diagnostic system according to one of the preceding claims, **characterised in that** during recording of the structure-borne noise spectrum for a specific valve position in each case an additional structure-borne noise spectrum is recorded in another valve position and the structure-borne noise spectrum in the specific valve position is freed from coinciding spectral components of the additionally recorded structure-borne noise spectrum before it is stored and/or evaluated.

5. Diagnostic system according to one of the preceding claims, **characterised in that** the device (14) for recording, storing and evaluating structure-borne noise spectra is part of the position controller (9).

## Revendications

1. Système de diagnostic pour une vanne (2) qui peut être actionnée par un régulateur (9) de position par l'intermédiaire d'un dispositif (6) d'entraînement comprenant un dispositif (14) de détection, de mémorisation et d'exploitation de spectre de bruit de structure sur la vanne, **caractérisé en ce que** le système de diagnostic est constitué de façon à mémoriser dans le dispositif (14) un spectre de bruit de structure détecté lorsque la vanne (2) intacte est légèrement ouverte, **en ce que** la vanne (2) est, à des fins de diagnostic, fermée, et **en ce que** la similitude du spectre de bruit de structure ainsi détecté avec le spectre du bruit de structure mémorisé est utilisée comme critère pour un défaut d'étanchéité de la vanne (2).

2. Système de diagnostic suivant la revendication 1, **caractérisé en ce que**, dans le dispositif (14), peut être mémorisé un autre spectre de bruit de structure détecté alors que la vanne (2) intacte est fermée et **en ce que** la similitude du spectre de bruit de structure détecté pour la vanne (2) fermée à des fins de diagnostic avec l'autre spectre de bruit de structure mémorisé est utilisée comme critère de l'intégrité de la vanne (2).

3. Système de diagnostic suivant la revendication 1 ou 2, **caractérisé en ce que** les critères sont combinés de préférence par logique floue en un signal d'état de la vanne.

4. Système de diagnostic suivant l'une des revendications précédentes, **caractérisé en ce que**, lors de la détection du spectre de bruit de structure pour une certaine position de la vanne, il est détecté respectivement un spectre supplémentaire de bruit de structure pour une autre position de la vanne et **en ce que** le spectre de bruit de structure pour la certaine position de la vanne est débarrassé avant sa mémorisation et/ou son exploitation de partie du spectre de bruit de structure détecté supplémentairement qui coïncide.

5. Système de diagnostic suivant l'une des revendications précédentes, **caractérisé en ce que** le dispositif (14) de détection, de mémorisation et d'exploitation de spectre de bruit de structure fait partie du régulateur de position.
